# FASCICULE DE BREVET EUROPEEN

(11) **EP 3 087 543 B1**
(45) Date de publication et mention de la délivrance du brevet: **11.12.2019**
(21) Numéro de dépôt: 14831007.1
(22) Date de dépôt: 22.12.2014
(51) Int. Cl.: G06Q 20/32, G06Q 20/38, G06Q 20/40, H04L 29/06, H04W 76/00, H04W 84/18

(54) **TRANSMISSION ET TRAITEMENT DE DONNÉES RELATIVES A UNE TRANSACTION SANS CONTACT**
ÜBERTRAGUNG UND VERARBEITUNG VON DATEN IM ZUSAMMENHANG MIT EINER KONTAKTLOSEN TRANSAKTION
TRANSMISSION AND PROCESSING OF DATA RELATING TO A CONTACTLESS TRANSACTION

(30) Priorité: 23.12.2013 FR 1363373
(43) Date de publication de la demande: 02.11.2016
(73) Titulaire: Orange, 75015 Paris (FR)
(72) Inventeur: BENDIABDALLAH, Halim, F-92420 Vaucresson (FR); AGRO, Roberto, F-92340 Bourg La Reine (FR); PICQUENOT, David, F-14280 Authie (FR)
(86) Numéro de dépôt international: PCT/FR2014/053520
(87) Numéro de publication internationale: WO 2015/097402

(56) Documents cités:
- EP-A1- 2 469 484
- US-A1- 2009 170 483
- US-A1- 2009 215 394
- LEONG C Y ET AL: "Near Field Communication and Bluetooth Bridge System for Mobile Commerce", INDUSTRIAL INFORMATICS, 2006 IEEE INTERNATIONAL CONFERENCE ON, IEEE, PI, 1 août 2006 (2006-08-01), pages 50-55, XP031003325, ISBN: 978-0-7803-9700-2

## Description

La présente invention se rapporte au domaine des télécommunications, et plus particulièrement à celui de réalisation d'une transaction entre un terminal mobile et une borne sans contact.

La plupart des terminaux mobiles existants permettent, non seulement d'établir des communications téléphoniques, mais également d'exécuter un certain nombre d'applications téléchargées dans un module sécurisé du terminal. Ce module sécurisé peut être un module mémoire du terminal ou un support amovible (par exemple une carte d'abonné UICC pour "Universal Integrated Circuit Card") inséré dans le terminal.

Certains de ces terminaux sont de plus équipés d'un module spécifique, dit "module sans contact", permettant au terminal mobile de dialoguer et/ou de réaliser des transactions sans contact avec des bornes dites "bornes sans contact". Plus précisément, ce module permet le transfert bidirectionnel de données entre une borne sans contact et une application préalablement téléchargée dans un module sécurisé du terminal. Une telle application est, par exemple, une application dans le domaine des transports où le passage du terminal mobile devant une borne permet de valider l'accès de l'utilisateur au moyen de transport ou une application de paiement sur mobile (le terme habituellement utilisé pour ces applications est le terme anglais « mobile wallet ») qui permet à un utilisateur du téléphone mobile de payer des biens, des factures, au moyen de ce téléphone mobile.

Cependant, un certain nombre de terminaux mobiles existants ne sont pas équipés de "module sans contact" et il n'est actuellement pas possible pour les utilisateurs de tels terminaux de bénéficier des services proposés par les bornes sans contacts.

Le document intitulé "Near Field Communication and Bluetooth Bridge System for Mobile Commerce" de Leong C Y et al. divulgue un dispositif pour permettre aux équipements non NFC (Near Field Communication) d'accéder à des services NFC.

Le document US 2009/0215394 A1 décrit une solution permettant à un terminal mobile apte à communiquer selon la technologie Bluetooth de communiquer avec un terminal de paiement sans contact.

Un des buts de l'invention est de remédier à des insuffisances/inconvénients de l'état de la technique et/ou d'y apporter des améliorations.

A cette fin, l'invention propose un procédé de transmission conforme à la revendication 1.

Ce procédé de transmission est un procédé de données relatives à une transaction sans contact entre un terminal mobile et un équipement, ledit équipement étant apte à émettre et à recevoir des données via un canal de communication sans contact en champ proche.

Le procédé de transmission comporte les étapes suivantes, mises en œuvre par un dispositif portable associé audit terminal mobile :
- réception de premières données de transaction via ledit canal de communication ;
- transmission d'un premier message contenant lesdites premières données via une liaison de communication établie avec ledit terminal mobile ;
- réception via ladite liaison de communication, d'un message de réponse audit premier message, ledit message de réponse contenant des deuxièmes données de transaction générées en fonction desdites premières données ;
- transmission desdites deuxièmes données via ledit canal de communication.

Le procédé de transmission comporte également une étape d'obtention par ledit dispositif portable d'un code confidentiel et une étape de transmission dudit code au terminal ou à l'équipement pour validation de ladite transaction.

L'étape d'obtention comporte une étape de lecture dudit code préenregistré dans une mémoire dudit dispositif portable, réalisée suite à une obtention d'un accord utilisateur via une première interface utilisateur dudit dispositif portable, ou une étape de réception dudit code via une deuxième interface utilisateur dudit dispositif portable.

Grâce au procédé de traitement, des messages émis par un équipement, tel qu'une borne sans contact, sont reçus par un terminal mobile et des messages émis par un terminal mobile sont reçus par la borne, sans nécessiter pour le terminal mobile l'utilisation de moyens de communication adaptés aux moyens de communication de l'équipement.

Il est ainsi possible pour un équipement de communiquer avec un terminal mobile, même si celui-ci ne peut établir de liaison de communication directe avec cet équipement. En particulier, l'équipement et le terminal peuvent communiquer dans le but de réaliser une transaction même si le terminal mobile ne possède de moyens de communication adaptés aux moyens de communication de l'équipement ou si le terminal mobile n'est pas suffisamment proche de l'équipement.

Un canal de communication en champ proche, par exemple un canal de communication de type NFC, nécessite que les deux entités soient très proches l'une de l'autre, environ une dizaine de centimètres. Dès lors que le dispositif portable se trouve à environ une dizaine de centimètres de l'équipement ou à une distance inférieure à dix centimètres, le dispositif portable reçoit des messages de l'équipement et les retransmet à destination du terminal mobile auquel il est associé. De même, il peut relayer vers l'équipement les messages qu'il reçoit du terminal mobile.

Ainsi, le terminal mobile peut communiquer avec l'équipement même s'il ne se trouve pas dans le champ de réception des ondes transmises par l'équipement.

Une transaction sans contact peut donc avoir lieu entre le terminal mobile et l'équipement sans que l'utilisateur sorte le terminal mobile de la poche ou du sac dans lequel il est rangé. Ceci évite des manipulations pour l'utilisateur et réduit les risques de vol du terminal mobile.

La saisie d'un code confidentiel nécessaire pour valider certaines transactions est effectuée au niveau du dispositif portable. Cela permet de simplifier des manipulations pour l'utilisateur et de réduire les risques de vol du terminal mobile.

Selon un mode de réalisation particulier, le procédé de transmission comporte une étape d'analyse desdites premières données reçues pour déterminer si elles sont relatives à une demande de code confidentiel et ledit code confidentiel est inséré dans ledit premier message s'il est déterminé que les premières données sont relatives à une demande de code confidentiel.

Le terminal reçoit la demande de code et le code dans un même message. Le confidentiel peut ainsi être directement vérifié par le module de sécurité du terminal. Le terminal n'a pas à demander à l'utilisateur une saisie de code confidentiel. Cela simplifie le traitement effectué par ce terminal.

Selon un autre mode de réalisation, le procédé de transmission comporte une étape d'analyse desdites premières données reçues pour déterminer si elles sont relatives à une demande de code confidentiel et ledit code confidentiel est transmis audit équipement s'il est déterminé que les premières données sont relatives à une demande de code confidentiel.

Dans ce mode de réalisation, le code confidentiel est transmis à l'équipement sans que la demande de code ne parvienne au terminal.

Selon un autre mode de réalisation du procédé de transmission, utilisé seul ou en combinaison avec un des modes précédents, le code confidentiel est obtenu suite à une détection par ledit dispositif portable d'une action utilisateur signalant l'accord dudit utilisateur.

L'accord de l'utilisateur permet d'éviter la réalisation de transactions à l'insu de l'utilisateur. Cet accord permet de renforcer la sécurité du système.

Selon un mode de réalisation particulier du procédé de transmission de données, ladite liaison de communication est une liaison de type Bluetooth.

La technologie Bluetooth est un moyen simple pour faire communiquer deux entités, distante d'environ un mètre.

Selon un mode de réalisation particulier du procédé de transmission de données, ledit dispositif portable est associé audit terminal mobile par une procédure d'appairage.

L'appairage permet l'établissement d'une liaison sécurisée entre le terminal mobile et le dispositif portable pour laquelle les messages échangés sont cryptés.

Ceci évite ainsi que des entités malveillantes qui obtiendraient les messages échangés d'accéder à des données de transaction spécifiques à l'utilisateur, par exemple un code confidentiel.

L'invention se rapporte également à un procédé de traitement conforme à la revendication 7.

Ce procédé de traitement est un procédé de traitement de données relatives à une transaction sans contact entre un terminal mobile et un équipement, ledit équipement étant apte à émettre et à recevoir des données via un canal de communication sans contact en champ proche.

Le procédé de traitement comporte les étapes suivantes, mises en œuvre par ledit terminal mobile :
- réception d'un premier message contenant des premières données de transaction, via une liaison de communication établie entre ledit terminal et un dispositif portable associé audit terminal mobile, lesdites premières données ayant été reçues via ledit canal de communication ;
- transmission via ladite liaison de communication, d'un message de réponse audit premier message, ledit message de réponse contenant des deuxièmes données de transaction générées par ledit terminal mobile en fonction desdites premières données et destinées à être transmises par ledit dispositif portable audit équipement via ledit canal de communication.

Le terminal mobile reçoit ainsi des données de transaction émises par l'équipement, via un canal de communication en champ proche sans être nécessairement situé dans ce champ ou sans disposer de moyens de réception directe de données émises via un canal de communication en champ proche.

Des deuxièmes données de transaction générées en fonction des données de transaction reçues sont les mêmes que celles qui auraient été générées si le terminal mobile et l'équipement pouvaient communiquer directement via le canal de communication en champ proche.

Selon un mode de réalisation particulier du procédé de traitement de données, les premières données reçues sont transférées à un module de sécurité du terminal mobile et les deuxièmes données sont générées par ledit module de sécurité en fonction des premières données.

Les messages de données traités par un module de sécurité sont ainsi traités de façon sécurisée par une entité agencée pour traiter ces messages. Le terminal mobile traite ces messages de la même façon que s'il les recevait directement de l'équipement.

Ainsi, bien que le terminal mobile ne puisse communiquer directement avec l'équipement, les messages nécessaires à la réalisation d'une transaction sont reçus et émis par le terminal.

Selon un mode de réalisation du procédé de traitement de données, les premières données sont reçues par un premier module de communication dudit terminal et transférées au module de sécurité via un deuxième module de communication sans contact du terminal mobile et les deuxièmes données sont transmises par le module de sécurité audit premier module de communication du terminal via le deuxième module de communication du terminal.

Selon une caractéristique particulière du procédé de traitement, les données reçues ou transmises par le module de sécurité sont conformes au protocole SWP (« Single Wire Protocol »).

Selon un mode de réalisation particulier du procédé de traitement de données, les premières données sont reçues par le deuxième module de communication du terminal dans un message au format HCI (« Host Controller Interface ») et les deuxièmes données sont transmises par ledit deuxième module de communication du terminal dans un message au format HCI.

L'invention se rapporte également à un dispositif portable conforme à la revendication 11.

Ce dispositif portable est associé à un terminal mobile et comporte :
- un premier module de communication configuré pour recevoir via un canal de communication sans contact en champ proche, des premières données de transaction émises par un équipement et pour émettre des deuxièmes données de transaction via ledit canal de communication ;
- un deuxième module de communication configuré pour transmettre un premier message contenant lesdites premières données via une liaison de communication établie avec ledit terminal mobile et pour recevoir, via ladite liaison de communication, un message de réponse audit premier message, ledit message de réponse contenant lesdites deuxièmes données de transaction générées par ledit terminal mobile en fonction desdites premières données.

Selon une caractéristique particulière, le dispositif portable comporte une interface utilisateur pour commander l'arrêt ou la mise en fonctionnement dudit dispositif et/ou l'envoi d'un code confidentiel stocké dans une mémoire dudit dispositif portable.

L'invention se rapporte encore à un système conforme à la revendication 13, comprenant un terminal mobile et un dispositif portable associé.

Le terminal mobile comporte un premier module de communication configuré pour :
- recevoir un premier message contenant des premières données de transaction via une liaison de communication établie entre ledit terminal et un dispositif portable associé audit terminal mobile, lesdites premières données ayant été reçues par ledit dispositif portable via un canal de communication sans contact en champ proche, et
- transmettre, via ladite liaison de communication, un message de réponse audit premier message, ledit message de réponse contenant des deuxièmes données de transaction générées par ledit terminal mobile en fonction desdites premières données et destinées à être transmises par ledit dispositif portable via ledit canal de communication.

Selon un mode de réalisation particulier, le terminal mobile comporte en outre un module de sécurité et un deuxième module de communication, ledit deuxième module de communication étant apte à recevoir et/ou à émettre des données en provenance et/ou à destination d'une antenne reliée audit deuxième module de communication, à communiquer avec le module de sécurité, à recevoir des premières données en provenance dudit premier module de communication du terminal et à transmettre audit premier module de communication du terminal, des deuxièmes données générées par le module de sécurité.

L'invention se rapporte aussi à un module de communication sans contact destiné à être installé dans un terminal mobile comportant un premier module d'interface pour émettre et recevoir des données via un canal de communication sans contact en champ proche et un deuxième module d'interface pour communiquer avec un module de sécurité, caractérisé en ce qu'il comporte en outre un troisième module d'interface pour recevoir des premières données en provenance d'un deuxième module de communication dudit terminal et pour émettre des deuxièmes données générées par ledit module de sécurité vers ledit deuxième module de communication du terminal.

L'invention se rapporte également à un programme d'ordinateur comprenant des instructions pour la mise en œuvre du procédé de transmission de données relatives à une transaction tel que décrit précédemment, lorsque ce programme est exécuté par un processeur.

L'invention se rapporte enfin à un programme d'ordinateur comprenant des instructions pour la mise en œuvre du procédé de traitement de données relatives à une transaction tel que décrit précédemment, lorsque ce programme est exécuté par un processeur.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemples non limitatifs, en référence aux dessins annexés, dans lesquels :
- la figure 1 est un schéma illustrant un système selon un mode de réalisation de l'invention,
- la figure 2 est un schéma illustrant un dispositif portable apte à réaliser les étapes d'un procédé de transmission de données relatives à une transaction selon un mode de réalisation,
- la figure 3 est un organigramme illustrant les différentes étapes d'un procédé de transmission de données relatives à une transaction et d'un procédé de traitement de ces données selon un mode de réalisation de l'invention,
- la figure 4 est un schéma illustrant un terminal mobile apte à réaliser les étapes d'un procédé de traitement de données relatives à une transaction selon un premier mode de réalisation,
- la figure 5 est un organigramme illustrant les différentes étapes d'un procédé de traitement de données relatives à une transaction selon un premier mode de réalisation de l'invention,
- la figure 6 est un schéma illustrant un terminal mobile apte à réaliser les étapes d'un procédé de traitement de données relatives à une transaction selon un deuxième mode de réalisation,
- la figure 7 est un organigramme illustrant les différentes étapes d'un procédé de traitement de données relatives à une transaction selon un deuxième mode de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

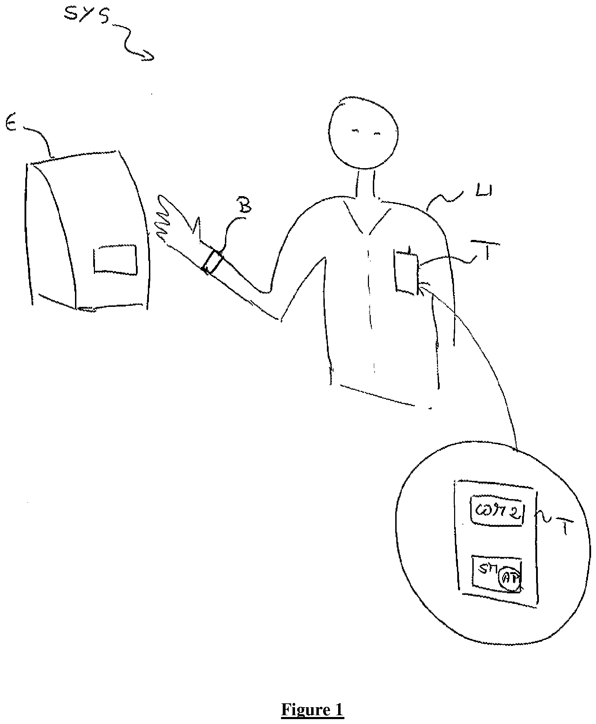

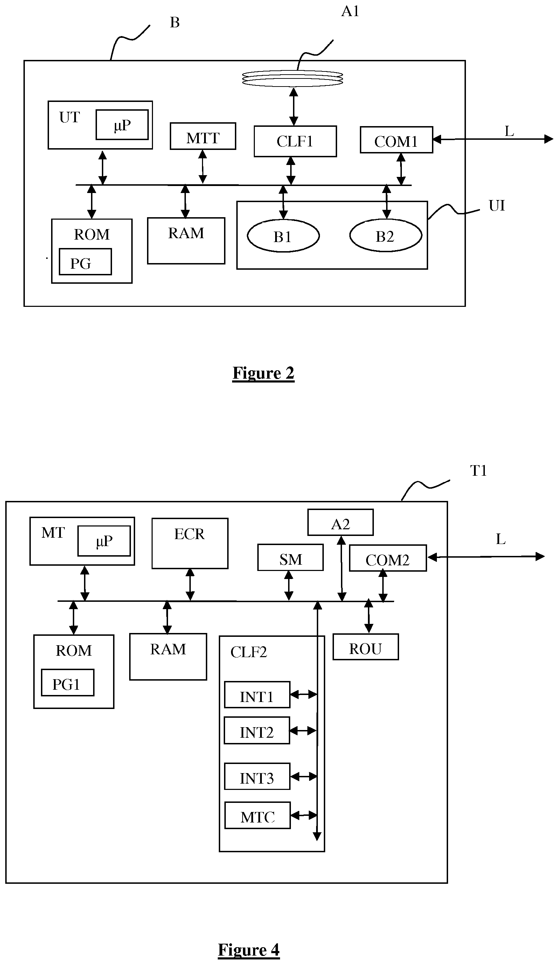

Un mode de réalisation d'un procédé de transmission et d'un procédé de traitement de données relatives à une transaction sans contact va maintenant être décrit en référence aux figures 1 et 2.

En référence à la figure **1****,** un système SYS comprend un terminal mobile T d'un utilisateur U, un dispositif portable B et un équipement E.

L'équipement E, appelé également «borne sans contact », est un équipement possédant un module sans contact adapté pour l'émission et la réception de messages selon une technologie de communication en champ proche, typiquement une technologie NFC (pour « Near Field Communication »).

Le terminal mobile T est par exemple un Smartphone (marque déposée).

A titre d'alternative, le terminal mobile T est par exemple un PDA (pour "Personal Digital Assistant").

Le terminal mobile T comporte un module de communication COM2 et un module de sécurité SM.

Le module de communication COM2 est par exemple un module de communication sans fil, de type Bluetooth.

Le module de sécurité SM est par exemple une carte d'abonné de type UICC (pour "Universal Integrated Circuit Card").

A titre d'alternative, le module de sécurité est une zone mémoire sécurisée du terminal mobile ou un support amovible d'un autre type (par exemple une carte d'abonné de type SIM ou une carte à mémoire (SD card, Embeded Secure controler ...)).

Une ou plusieurs applications AP ont été préalablement enregistrées dans le module de sécurité SM.

La procédure d'enregistrement d'une application dans un module de sécurité tel que le module de sécurité SM comporte généralement une phase de téléchargement de l'application auprès d'un serveur distant. Cette procédure connue ne sera pas décrite ici.

Le dispositif portable B est par exemple un bracelet que l'utilisateur installe autour de son poignet ou un objet, par exemple de type « porte clé », facilement accessible par l'utilisateur.

La **figure 2** illustre un exemple de dispositif portable B selon un mode de réalisation.

Le dispositif portable B comporte une unité de traitement UT équipée d'un microprocesseur, une mémoire morte de type ROM, une mémoire vive de type RAM.

Le dispositif portable B comporte également un premier module de communication CLF1 et une antenne associée A1. Il comporte également un module de traitement MTT et un deuxième module de communication COM1.

Le module de communication CLF1 est un module de communication sans contact en champ proche. Il est adapté pour communiquer avec l'équipement E, via l'antenne A1 et via un canal de communication C1 sans contact et en champ proche.

De façon connue, une communication sans contact en champ proche entre deux entités nécessite que les deux entités soient distantes d'environ une dizaine de centimètres ou de moins de dix centimètres.

Le module de communication CLF1 est par exemple un module de communication de type NFC.

Le deuxième module de communication COM1 est adapté pour communiquer avec le module de communication COM2 du terminal mobile T via une liaison de communication L.

Le deuxième module de communication COM1 du dispositif portable B est de type Bluetooth si le module de communication COM2 du terminal T est de type Bluetooth.

A titre d'alternative, le deuxième module de communication COM1 du dispositif portable B et le module de communication COM2 du terminal mobile T sont des modules de communication sans fil de type Wi-fi ou des modules de communication de type filaire.

Le dispositif portable B comporte également une interface utilisateur UI comportant un premier bouton B1 et un deuxième bouton B2.

Le premier bouton B1 est par exemple un bouton « marche/arrêt », par exemple un interrupteur, adapté pour commander la mise en fonctionnement ou au contraire l'arrêt du fonctionnement du dispositif portable B. Lorsqu'il ne fonctionne pas, le dispositif portable B ne peut ni émettre ni recevoir des données.

Le deuxième bouton B2 permet de commander l'envoi par le dispositif portable B, via le module de communication CLF1 et le canal de communication C1, d'un code confidentiel préalablement enregistré dans une mémoire de ce dispositif portable B.

A titre d'alternative, le dispositif portable B ne comporte pas d'interface utilisateur ou encore l'interface utilisateur UI ne comporte qu'un seul des boutons B1 et B2.

La mémoire morte de type ROM comporte des registres mémorisant un programme d'ordinateur PG comportant des instructions de programme adaptées à mettre en œuvre un procédé de transmission de données relatives à une transaction selon un mode de réalisation de l'invention décrit ultérieurement en référence à la figure 3.

Les principales étapes d'un procédé de transmission de données relatives à une transaction sans contact et d'un procédé de traitement de données relatives à une transaction sans contact vont maintenant être décrites en référence à la **figure 3****.**

Lors d'une étape préalable E0, un appairage Bluetooth est réalisé entre le dispositif portable B et le terminal mobile T. Cet appairage permet au terminal mobile T et au dispositif portable B de communiquer selon une liaison de type Bluetooth.

L'appairage comprend une génération d'un code d'appairage CA par le dispositif portable B et l'affichage de ce code sur un écran du dispositif portable B. Le code affiché est ensuite saisi par un utilisateur du terminal mobile T au moyen d'une interface utilisateur de ce terminal T. Le code d'appairage CA est ainsi connu des deux entités et permet le chiffrement des données échangées entre les deux entités.

Dans le cas où le dispositif portable B ne comporte pas d'écran, le code d'appairage CA est par exemple enregistré dans une mémoire du dispositif portable lors de sa fabrication et communiqué à l'utilisateur lors de l'acquisition du dispositif portable, par exemple par une notice jointe.

La procédure d'appairage est une procédure classique. Elle est réalisée une seule fois. Il n'est pas nécessaire de réitérer cette procédure à chaque utilisation du dispositif portable B ou après un arrêt de fonctionnement du dispositif.

Lors d'une étape E1, suite au positionnement par l'utilisateur U du dispositif portable B dans un environnement proche de l'équipement E, typiquement à une distance inférieure à une dizaine de centimètres, le module de communication CLF1 du dispositif portable B reçoit via l'antenne A1, des données D1 relatives à une transaction TR.

Les données D1 sont transmises de l'équipement E vers le dispositif portable B via un canal de communication C1.

Le canal de communication C1 est un canal de communication sans contact en champ proche.

Plus précisément, l'équipement E émet un champ magnétique et lorsque le dispositif portable B entre dans le champ magnétique émis par l'équipement E, il reçoit via l'antenne A1, un signal représentatif des données D1 émis par l'équipement E. Le signal reçu par l'antenne A1 est transmis au module de communication CLF1 qui obtient les données D1 en effectuant une démodulation du signal reçu.

Les données D1 sont relatives à une transaction TR.

Les données D1 comprennent par exemple un identifiant de commande IdC et un identifiant d'application AID d'une application AP.

Par exemple l'identifiant de commande IdC est un identifiant SELECT défini dans la norme ISO 7816-4 et les données D1 permettent de sélectionner l'application AP d'identifiant AID parmi les applications enregistrées dans le terminal mobile T.

Lors d'une étape E2, une liaison de communication L est établie entre le dispositif portable B et le terminal T.

Lors d'une étape E4, un message M1 contenant les données D1 est construit par le module de traitement MTT du dispositif portable B et transmis au terminal mobile T via la liaison de communication L, par le deuxième module de communication COM1 du dispositif portable B.

Le message M1 comprend par exemple les premières données D1 chiffrées avec le code d'appairage CA.

Le message M1 représente un premier message au sens de l'invention.

Lors d'une étape E6, le message M1 est reçu par le module de communication COM2 du terminal T.

Lors d'une étape E8, le terminal mobile T détermine un message M2 de réponse au premier message M1.

Le message M2 représente un deuxième message au sens de l'invention.

Le message M2 contient des deuxièmes données D2 générées par le terminal mobile T en fonction des premières données D1.

L'étape E8 comprend l'obtention des données D1 par déchiffrement des données reçues dans le message M1 au moyen du code d'appairage CA.

L'étape E8 comprend également la transmission des premières données D1 au module de sécurité SM du terminal mobile T, la génération par le module de sécurité SM, et plus précisément par l'application AP d'identifiant AID, de deuxièmes données D2 en fonction des premières données D1 et la réception en provenance du module de sécurité SM, des deuxièmes données D2.

Les deuxièmes données D2 sont générées à partir d'une information stockée dans le module de sécurité SM.

Les deuxièmes données D2 comprennent par exemple une information générée par l'application AP indiquant que l'application AP a été correctement sélectionnée.

Le message M2 comprend par exemple les deuxièmes données D2 chiffrées avec le code d'appairage CA.

Lors d'une étape E10, le message de réponse M2 est transmis par le module de communication COM2 du terminal mobile T, via la liaison de communication L, au dispositif portable B.

L'étape E10 est suivie d'une étape E12 lors de laquelle le message M2 est reçu par le deuxième module de communication COM1 du dispositif portable B et les données D2 contenues dans le message de réponse M2 sont obtenues par le module de traitement MTT du dispositif portable B et transmises à l'équipement E, par le module de communication NFC1 du dispositif portable B, via l'antenne A1 et le canal de communication C1.

Puis, lors d'une étape E14 réalisée suite à la réception par l'équipement E des données D2, le module de communication CLF1 du dispositif portable B reçoit via l'antenne A1 et le canal de communication C1, des données D3 relatives à la transaction TR.

Les données D3 correspondent à une commande définie dans la norme ISO 7816-4.

L'étape E14 est suivie d'une étape E18, lors de laquelle un message M3 contenant les données D3 est transmis au terminal mobile T, via la liaison de communication L, par le module de communication COM1 du dispositif portable B.

Le message M3 représente un premier message au sens de l'invention.

Lors d'une étape E20, le message M3 est reçu par le mode de communication COM2 du terminal T.

Lors d'une étape E22, similaire à l'étape E8, le terminal mobile T détermine un message M4 de réponse au message M3.

Le message M4 représente un deuxième message au sens de l'invention.

Le message M4 contient des deuxièmes données D4 générées par le terminal mobile T en fonction des premières données D3.

Les deuxièmes données D4 comprennent par exemple une information générée par l'application AP à partir d'une information stockée dans le terminal mobile, par exemple dans le module de sécurité SM.

L'information stockée est par exemple une clé secrète, une valeur d'un compteur...

L'information générée est par exemple une valeur, reçue ou lue dans une mémoire, chiffrée avec une clé, une valeur de compteur calculée à partir d'une valeur de compteur stockée, un code confidentiel...

Lors d'une étape E24, le message de réponse M4 est transmis par le module de communication COM2 du terminal T au dispositif portable B, via la liaison de communication L.

Le message M4 est un message de réponse au premier message M3.

L'étape E24 est suivie d'une étape E26 lors de laquelle le message de réponse M4 est reçu par le deuxième module de communication COM1 du dispositif portable B.

Le module de traitement MTT du dispositif portable B obtient les deuxièmes données D4 contenues dans le message M4 et le module de communication NFC1 transmet les deuxièmes données D4 à l'équipement E via l'antenne A1 et via le canal de communication C1.

En fonction de l'application AP, les étapes E14 à E26 sont éventuellement réitérées une ou plusieurs fois pour la transaction TR.

A titre d'alternative, les étapes E14 à E26 ne sont pas réalisées.

Les étapes E4, E12, E14, E18 et E26 mises en œuvre par le dispositif portable B, représentent les étapes du procédé de transmission de données relatives à une transaction.

Les étapes E6, E8, E10, E20, E20, E22 et E24 mises en œuvre par le terminal mobile T, représentent les étapes du procédé de traitement de données relatives à une transaction.

Dans une première variante du mode de réalisation décrit, l'étape E14 de réception de premières données D3 par le dispositif portable B est suivie d'une étape E16 lors de laquelle le module de traitement MMT du dispositif portable B analyse les données D3 reçues et détermine si elles sont relatives à une demande de code confidentiel.

Les données D3 sont par exemple relatives à une demande de code confidentiel si elles comprennent un identifiant de commande de demande de code confidentiel.

Si les données D3 ne sont pas relatives à une demande de code confidentiel, l'étape E16 est suivie de l'étape E18 décrite précédemment d'envoi par le dispositif portable B au terminal mobile T, d'un premier message M3 contenant les premières données D3.

Si les données D3 sont relatives à une demande de code confidentiel, l'étape E16 est suivie d'une étape E30 lors de laquelle le module de traitement MTT du dispositif portable B informe l'utilisateur U qu'un code confidentiel est requis par l'équipement E.

Cette information est par exemple effectuée par affichage d'un message sur un écran du dispositif portable B si le dispositif portable B est équipé d'un écran ou par émission d'un son, par exemple un bip, par le dispositif portable B.

Les données D3 ne sont pas transmises au terminal mobile T.

A titre d'alternative, l'étape E30 d'information de l'utilisateur est réalisée par l'équipement E, par exemple par affichage d'un message sur un écran de l'équipement E.

L'étape E30 est suivie d'une étape E32 lors de laquelle le module de traitement MTT du dispositif portable B obtient et transmet à destination de l'équipement E, via le premier module de communication CLF1 et le canal de communication C1, un code confidentiel CC.

Le code confidentiel CC est par exemple préenregistré dans une mémoire du dispositif portable B et lu dans cette mémoire par le module de traitement MTT suite à la détection par ce module de traitement MTT d'une action de l'utilisateur d'appui sur le deuxième bouton B2.

L'appui sur le deuxième bouton B2 par l'utilisateur est une action de l'utilisateur pour transmettre le code confidentiel. En d'autres termes, cet appui constitue un accord de l'utilisateur pour la transaction TR. Il permet à l'utilisateur de valider la transaction.

A titre d'alternative, le code confidentiel CC est saisi par l'utilisateur U au moyen d'une interface utilisateur, par exemple un clavier numérique affiché sur un écran du dispositif portable B, si ledit dispositif est équipé d'un écran.

L'étape E32 est suivie d'une nouvelle étape E14 de réception par le dispositif portable B, de données relatives à la transaction TR émises par le dispositif E.

Dans une deuxième variante du mode de réalisation décrit, l'étape E14 de réception de premières données D3 par le dispositif portable B est suivie d'une étape E16 lors de laquelle le module de traitement MMT du dispositif portable B analyse les données D3 reçues et détermine si elles sont relatives à une demande de code confidentiel.

Les données D3 sont par exemple relatives à une demande de code confidentiel si elles comprennent un identifiant de commande de demande de code confidentiel.

Si les données D3 ne sont pas relatives à une demande de code confidentiel, l'étape E16 est suivie de l'étape E18 décrite précédemment d'envoi par le dispositif portable B au terminal T, d'un premier message M3 contenant les premières données D3.

Si les données D3 sont relatives à une demande de code confidentiel, l'étape E16 est suivie d'une étape d'obtention de code confidentiel lors de laquelle le module de traitement MTT du dispositif portable B obtient un code confidentiel CC.

Le code confidentiel CC est par exemple préenregistré dans une mémoire du dispositif portable B et lu dans cette mémoire par le module de traitement MTT.

Le code confidentiel est par exemple lu suite à la détection par ce module de traitement MTT d'une action de l'utilisateur d'appui sur le deuxième bouton B2.

L'appui sur le deuxième bouton B2 par l'utilisateur est une action de l'utilisateur pour permettre la transmission du code confidentiel. En d'autres termes, cet appui constitue un accord de l'utilisateur pour la transaction TR. Il permet à l'utilisateur de valider la transaction.

A titre d'alternative, le code confidentiel est lu dans la mémoire sans accord explicite de l'utilisateur.

Egalement, à titre d'alternative, le code confidentiel CC est saisi par l'utilisateur U au moyen d'une interface utilisateur, par exemple un clavier numérique affiché sur un écran du dispositif portable B, si ledit dispositif est équipé d'un écran.

Puis le dispositif portable B construit un message contenant les premières données D3 et le code confidentiel CC et transmet le message au terminal T.

Le terminal T peut ainsi vérifier le code confidentiel.

Dans une troisième variante du mode de réalisation, suite au positionnement par l'utilisateur U du dispositif portable B dans un environnement proche de l'équipement E, une première transaction nécessitant la présentation d'un code confidentiel est initialisée.

Suite à la réception d'un message de données, le terminal T détermine qu'il ne peut exécuter la commande reçue dans le message car d'une part, l'exécution de la transaction, et en conséquence de cette commande, est soumise à la présentation d'un code confidentiel et que d'autre part, aucun code n'a été présenté. Le terminal T est dans un état « code non présenté ».

Le terminal T renvoie alors à destination de l'équipement E via le dispositif portable B, une réponse signalant l'obligation de présenter un code confidentiel.

Suite à la réception de cette réponse, l'équipement E signale à l'utilisateur, par exemple via un signal sonore prédéfini émis par l'équipement E, par exemple un bip, et/ou un message affiché sur un écran de cet équipement qu'une saisie d'un code confidentiel doit être effectuée.

L'utilisateur éloigne le dispositif portable B de l'équipement E et déclenche l'envoi par le dispositif portable B au terminal mobile M d'un code confidentiel CC préenregistré dans une mémoire du dispositif portable B.

Le déclenchement est par exemple réalisé par un appui par l'utilisateur d'un bouton, par exemple le bouton B2 ou d'un autre bouton du dispositif portable B dédié à cette fonction.

Suite à la détection de l'action utilisateur, le dispositif portable B envoie le code confidentiel préenregistré CC au terminal T.

Le code confidentiel CC est par exemple transmis dans une commande de type APDU.

Suite à la réception du code confidentiel, le terminal T, et plus précisément le module sécurisé du terminal T vérifie la validité du code confidentiel et, en cas de validité du code confidentiel présenté, se positionne dans un état « code valide ».

L'utilisateur peut approcher de nouveau le dispositif portable B pour réaliser ou poursuivre la transaction.

Dans une variante de ce mode de réalisation, l'utilisateur commande la transmission du code confidentiel au terminal mobile M par appui sur le bouton dédié avant de demander la réalisation d'une transaction, c'est-à-dire avant d'approcher le dispositif portable B de l'équipement E.

Dans la même optique, la réalisation de toute transaction peut être soumise à une autorisation préalable de l'utilisateur.

Dans ce mode de réalisation, le dispositif portable B ne retransmet pas au terminal mobile M les premières données reçues d'un équipement E tant qu'il n'a pas détecté un accord de l'utilisateur pour réaliser une transaction.

Cet accord est par exemple donné par l'utilisateur par appui d'un bouton spécifique du dispositif portable.

Le dispositif portable B passe de nouveau dans un mode où il ne retransmet pas les premières données reçues lorsqu'il détecte une fin de transaction ou après un délai prédéfini.

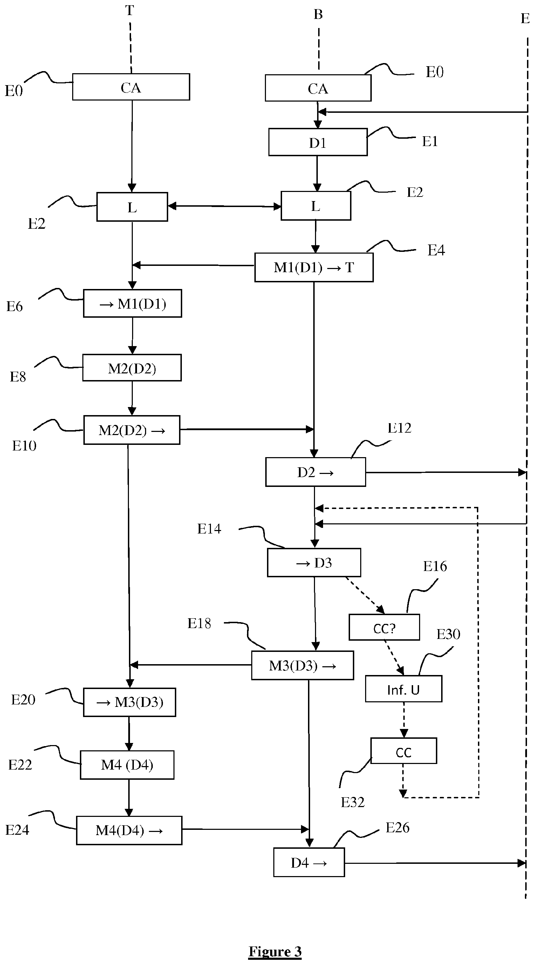

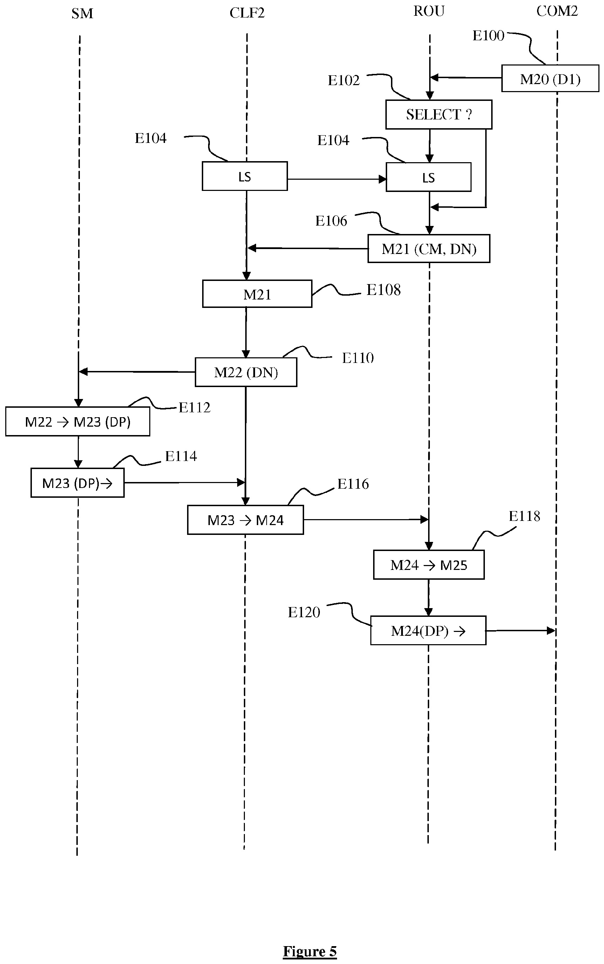

Un premier mode de réalisation particulier du procédé de traitement de données relatives à une transaction est décrit en référence aux figures 4 et 5.

La **figure 4** représente un exemple de terminal mobile T1.

Le terminal T1 comporte de façon connue, notamment une unité de traitement MT équipée d'un microprocesseur, une mémoire morte de type ROM, une mémoire vive de type RAM. Le terminal T1 peut comporter de manière classique et non exhaustive les éléments suivants: un microphone, un haut-parleur, un lecteur de disque, un moyen de stockage...

Le terminal mobile T1 comporte également un module sécurisé SM qui est par exemple une carte d'abonné de type UICC (pour "Universal Integrated Circuit Card").

Le terminal mobile T1 comporte également un premier module de communication COM2, un deuxième module de communication CLF2, une antenne et un module de routage ROU.

Le premier module de communication COM2 est un module de communication apte à transmettre et à recevoir des messages de données au travers d'une liaison de communication par exemple de type Bluetooth.

A titre d'alternative, le premier module de communication COM2 est adapté pour une communication sans fil de type Wi-fi ou pour une communication via une liaison filaire.

Le deuxième module de communication CLF2 est un module de communication sans contact, par exemple un module de communication sans contact en champ proche. Par exemple, le module de communication sans contact est un module de communication de type NFC.

Le deuxième module de communication sans contact CLF2 comporte un premier module d'interface INT1 avec l'antenne A2, un deuxième module d'interface INT2 pour la communication avec le module de sécurité SM, un troisième module d'interface INT3 avec le module de routage ROU du terminal mobile T1 et un module de traitement MTC.

Le premier module d'interface INT1 est apte à recevoir et émettre des signaux compatibles NFC (pour "Near Field Communication") via l'antenne A2.

Le deuxième module d'interface INT2 est apte à émettre et à recevoir des messages du module de sécurité SM.

Le troisième module d'interface INT3 est apte à transmettre et à recevoir des messages du module de routage ROU du terminal mobile T1.

Le terminal T1 peut également comporter un clavier, un écran de visualisation ECR et un module d'affichage pour l'affichage sur l'écran de visualisation ECR.

La mémoire morte de type ROM comporte des registres mémorisant un programme d'ordinateur PG1 comportant des instructions de programme adaptées à mettre en œuvre un procédé de traitement de données relatives à une transaction selon un mode de réalisation de l'invention décrit ultérieurement en référence à la figure 5.

Un mode de réalisation d'un procédé de traitement de données relatives à une transaction mis en œuvre dans le terminal mobile T1, va maintenant être décrit en référence à la **figure 5****.**

Lors d'une étape préalable, une liaison de communication L est établie entre le terminal mobile T1 et un dispositif portable associé, par exemple le dispositif portable B décrit en référence à la figure 2.

Lors d'une étape E100, un message M20 transmis par le dispositif portable B via la liaison de communication L est reçu par le module de communication COM2 et transféré au module de routage ROU.

Le message M20 contient des premières données DN reçues d'un équipement E tel que décrit en référence à la figure 1, via un canal de communication sans contact en champ proche.

Lors d'une étape E102, le module de routage ROU extrait du message M20 les premières données DN et détermine si les données DN sont relatives à un premier message d'une transaction TR.

Les données DN sont relatives à un premier message pour la transaction TR si elles comportent par exemple une commande de sélection d'une application, par exemple une commande de type SELECT, définie dans la norme ISO 7816-4.

Si les données DN sont relatives à un premier message pour la transaction TR, le module de routage ROU du terminal mobile T1 établit, lors d'une étape E104, une liaison de communication LS avec le deuxième module de communication CLF2. La liaison de communication LS est par exemple une liaison série.

Si les données DN ne sont relatives pas à un premier message pour la transaction TR, une liaison de communication LS étant déjà établie entre le module de routage ROU et le deuxième module de communication CLF2 et l'étape E102 est suivie d'une étape E106.

Lors d'une étape E106, consécutive à l'étape E102 ou à l'étape E104, le module de routage ROU du terminal mobile T1 construit un message M21 contenant les premières données D1et transmet le message M21 construit au deuxième module de communication CLF2 via la liaison série LS.

Le message M21 est par un exemple un message au format HCI (pour « Host Controller Interface »). Le format HCI est par exemple décrit dans la norme ETSI TS 102 622.

Le message M21 est par exemple une commande HCI comportant une valeur de commande CM et les premières données D1. Par exemple, les premières données D1 sont encapsulées dans le message M21.

Le message M21 est par exemple une commande HCI de type « EVT-SEND-DATA ».

L'étape E106 est suivie d'une étape E108 lors de laquelle le message M21 est reçu par le troisième module d'interface INT3 du module sans contact CLF2 et transmis au module de traitement MTC du deuxième module sans contact CLF2.

Lors d'une étape E110, le module de traitement MTC détermine, par exemple par extraction de la valeur de commande CM du message M21, que les données contenues dans le message M21 proviennent du module de routage ROU du terminal mobile T1, via la liaison de communication série LS, et transforme le message M21 en un message M22.

Le message M22 est par exemple un message au format SWP (pour « Single Wire Protocol »). La norme ETSI TS 102 613 définit le protocole SWP utilisé pour la communication entre un module de communication sans contact de type NFC et un module de sécurité, tel que le module de sécurité SM.

Le message M22 est un message contenant les premières données D1 reçues dans le message M20.

Le message M22 est transmis par le module de traitement MTC du deuxième module de communication CLF2 au module de sécurité SM via le deuxième module d'interface INT2.

Lors d'une étape E112, suite à la réception du message M22, le module de sécurité SM, et plus particulièrement l'application AP sélectionnée pour la transaction TR en cours, traite le message M22 reçu et génère des deuxième données de transaction DP en fonction des premières données DN et construit un message de réponse M23 contenant les deuxièmes données générées D2.

Les deuxièmes données DP sont par exemple générées en fonction d'une information stockées dans le module de sécurité SM.

Le message de réponse M23 est par exemple un message au format SWP.

Le message M23 est transmis par le module de sécurité SM au module de traitement MTC du module de communication CLF2, via le deuxième module d'interface INT2 du module de communication sans contact CLF2 lors d'une étape E114.

Puis, lors d'une étape E116, le module de traitement MCT du deuxième module de communication CLF2 construit un message M24 et le transmet au module de routage ROU du terminal mobile T1 via le troisième module d'interface INT3 et la liaison de communication série LS.

Le message M24 est par exemple un message au format HCI et est obtenu par adaptation au format HCI du message M23. Le message M24 contient les deuxièmes données DP.

Lors d'une étape E118, le module de routage ROU du terminal mobile T1 reçoit le message M24 et le convertit en un message M25.

Le message M25 est par exemple obtenu par extraction des deuxièmes données de transaction DP du message M24 et par chiffrement des deuxièmes données D2 avec un code d'appairage CA partagé par le terminal mobile T et le dispositif portable B..

Lors d'une étape E120, le message M25 est transmis par le premier module de communication COM2 au dispositif portable B, via la liaison de communication L établie entre le terminal mobile T1 et le dispositif portable B.

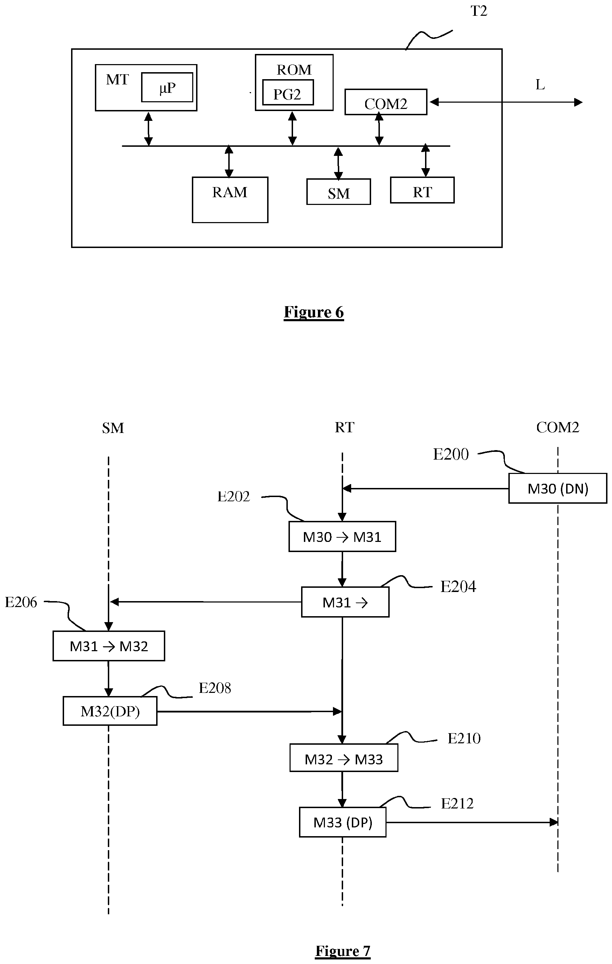

Un deuxième mode de réalisation particulier du procédé de traitement de données est décrit en référence aux figures 6 et 7.

La **figure 6** représente un exemple de terminal mobile T2.

Le terminal T2 comporte de façon connue, notamment une unité de traitement MT équipée d'un microprocesseur, une mémoire morte de type ROM, une mémoire vive de type RAM. Le terminal T2 peut comporter de manière classique et non exhaustive les éléments suivants : un clavier, un écran de visualisation, un module d'affichage pour l'affichage sur l'écran de visualisation, un microphone, un haut-parleur, un lecteur de disque, un moyen de stockage...

Le terminal mobile T2 comporte également un module sécurisé SM qui est par exemple une carte d'abonné de type UICC (pour "Universal Integrated Circuit Card").

Le terminal mobile T2 comporte également un module de communication COM2 et un module de routage RT.

Le module de communication COM2 est un module de communication apte à transmettre et à recevoir des messages de données au travers d'une liaison de communication par exemple de type Bluetooth.

A titre d'alternative, le module de communication COM2 est adapté pour une communication sans fil, par exemple de type Wi-fi ou pour une communication via une liaison filaire.

La mémoire morte de type ROM comporte des registres mémorisant un programme d'ordinateur PG2 comportant des instructions de programme adaptées à mettre en œuvre un procédé de traitement de données relatives à une transaction selon un mode de réalisation de l'invention décrit ultérieurement en référence à la figure 7.

Un mode de réalisation d'un procédé de traitement de données relatives à une transaction TR, mis en œuvre dans le terminal mobile T2, va maintenant être décrit en référence à la **figure 7****.**

Lors d'une étape préalable, une liaison de communication L est établie entre le terminal mobile T2 et un dispositif portable associé, par exemple le dispositif portable B décrit en référence à la figure 2.

Lors d'une étape E200, un message M30 transmis par le dispositif portable B via la liaison de communication L est reçu par le module de communication COM2 et transféré au module de routage RT du terminal mobile T2.

Le message M30 contient des premières données DN reçues d'un équipement E tel que décrit en référence à la figure 1, via un canal de communication sans contact en champ proche.

Lors d'une étape E202, le module de routage RT construit un message M31 contenant les premières données DN contenues dans le message M30.

Par exemple, le module de routage RT obtient les premières données DN par déchiffrage du message M30 à l'aide d'une clé d'appairage partagée par le terminal mobile T2 et le dispositif portable B associé et encapsule les premières données DN ainsi obtenues dans un message M31 au format SWP.

L'étape E202 est suivie d'une étape E204 lors de laquelle le message M31 est transmis par le module de routage RT du terminal mobile T2 au module de sécurité SM.

Lors d'une étape E206, suite à la réception du message M31, le module de sécurité SM, et plus particulièrement l'application AP sélectionnée pour la transaction TR en cours, traite le message M31 reçu et génère des deuxièmes données de transaction DP en fonction des premières données DN et construit un message de réponse M32 contenant les deuxièmes données générées DN.

Les deuxièmes données DP sont par exemple générées en fonction d'une information stockées dans le module de sécurité SM.

Le message de réponse M32 est un message au format SWP.

Le message M32 est transmis par le module de sécurité SM au module de routage RT du terminal mobile T2 lors d'une étape E208.

Lors d'une étape E210, le module de routage RT du terminal mobile T2 convertit le message M32 reçu en un message M33.

Le message M33 est par exemple obtenu par extraction des deuxièmes données de transaction DP du message M32 puis par chiffrement des deuxièmes données DP avec la clé d'appairage de la liaison établie entre le terminal mobile T2 et le dispositif portable B.

Le message M33 est transmis via le module de communication COM2 et la liaison de communication L au dispositif portable B lors d'une étape E212.

## Revendications

1. Procédé de transmission de données relatives à une transaction sans contact entre un terminal mobile (T) et un équipement (E), ledit équipement étant apte à émettre et à recevoir des données via un canal de communication (C1) sans contact en champ proche,
le procédé comportant les étapes suivantes, mises en œuvre par un dispositif portable (B) associé audit terminal mobile (T) :
- réception (E1, E14) de premières données de transaction (D1, D3) via ledit canal de communication (C1) ;
- transmission (E4, E18) d'un premier message (M1, M3) contenant lesdites premières données via une liaison de communication (L) établie avec ledit terminal mobile (T);
- réception (E12, E26) via ladite liaison de communication (L), d'un message de réponse (M2, M4) audit premier message (M1, M3), ledit message de réponse contenant des deuxièmes données de transaction (D2, D4) générées par ledit terminal mobile en fonction desdites premières données ;
- transmission desdites deuxièmes données (D2, D4) via ledit canal de communication (C1) ;
- obtention par ledit dispositif portable d'un code confidentiel ; et
- transmission dudit code au terminal ou à l'équipement pour validation de ladite transaction,
**caractérisé en ce que** ladite étape d'obtention comporte une étape de lecture dudit code préenregistré dans une mémoire dudit dispositif portable, réalisée suite à une obtention d'un accord utilisateur via une première interface utilisateur dudit dispositif portable, ou une étape de réception dudit code via une deuxième interface utilisateur dudit dispositif portable.

2. Procédé de transmission selon la revendication 1 **caractérisé en ce qu'**il comporte une étape d'analyse desdites premières données reçues pour déterminer si elles sont relatives à une demande de code confidentiel et dans lequel ledit code confidentiel est inséré dans ledit premier message s'il est déterminé que les premières données sont relatives à une demande de code confidentiel.

3. Procédé de transmission selon la revendication 1 **caractérisé en ce qu'**il comporte une étape d'analyse desdites premières données reçues pour déterminer si elles sont relatives à une demande de code confidentiel et dans lequel ledit code confidentiel est transmis audit équipement s'il est déterminé que les premières données sont relatives à une demande de code confidentiel.

4. Procédé de transmission selon la revendication 1 dans lequel le code confidentiel est obtenu suite à une détection par ledit dispositif portable d'une action utilisateur signalant l'accord dudit utilisateur

5. Procédé de transmission de données l'une des revendications précédentes dans lequel ladite liaison de communication est une liaison de type Bluetooth.

6. Procédé de transmission de données selon l'une des revendications précédentes dans lequel ledit dispositif portable est associé audit terminal mobile par une procédure d'appairage.

7. Procédé de traitement de données relatives à une transaction sans contact entre un terminal mobile (T) et un équipement (E), ledit équipement étant apte à émettre et à recevoir des données via un canal de communication (C1) sans contact en champ proche,
le procédé comportant les étapes suivantes, mises en œuvre par ledit terminal mobile (T) :
- réception (E6, E20) d'un premier message (M1, M3) contenant des premières données de transaction (D1, D3), via une liaison de communication (L) établie entre ledit terminal (T) et un dispositif portable (B) associé audit terminal mobile, lesdites premières données ayant été reçues via ledit canal de communication (C1);
- transmission (E10, E24) via ladite liaison de communication (L), d'un message de réponse (M2, M4) audit premier message (M1, M3), ledit message de réponse contenant des deuxièmes données de transaction (D2, D4) générées par ledit terminal mobile en fonction desdites premières données (D1, D3) et destinées à être transmises par ledit dispositif portable (B) audit équipement (E) via ledit canal de communication (C1) ;
le procédé étant **caractérisé en ce qu'**il comporte une étape de réception d'un code confidentiel pour validation de ladite transaction, ledit code confidentiel étant obtenu et transmis par ledit dispositif portable, ledit code étant obtenu par lecture dudit code préenregistré dans une mémoire dudit dispositif portable, réalisée suite à une obtention d'un accord utilisateur via une première interface utilisateur dudit dispositif portable, ou par réception dudit code via une deuxième interface utilisateur dudit dispositif portable.

8. Procédé de traitement de données selon la revendication 7 dans lequel les premières données reçues sont transférées à un module de sécurité du terminal mobile et dans lequel les deuxièmes données sont générées par ledit module de sécurité en fonction des premières données (D1, D3).

9. Procédé de traitement de données selon la revendication 8 dans lequel les premières données sont reçues par un premier module de communication (COM2) dudit terminal et transférées au module de sécurité (SM) via un deuxième module de communication sans contact (CLF2) du terminal mobile et dans lequel les deuxièmes données sont transmises par le module de sécurité audit premier module de communication (COM2) du terminal via le deuxième module de communication (CLF2) du terminal.

10. Procédé de traitement de données selon la revendication 9 dans lequel les premières données sont reçues par le deuxième module de communication (CLF2) du terminal dans un message au format HCI (« Host Controller Interface ») et dans lequel les deuxièmes données sont transmises par ledit deuxième module de communication (CLF2) du terminal dans un message au format HCI.

11. Dispositif portable (B) associé à un terminal mobile (T, T1, T2) comportant :
- un premier module de communication (CLF1) configuré pour recevoir via un canal de communication (C1) sans contact en champ proche, des premières données de transaction (D1, D3) émises par un équipement (E) et pour émettre des deuxièmes données de transaction (D2, D4) via ledit canal de communication (C1) ;
- un deuxième module de communication (COM1) configuré pour transmettre un premier message (M1, M3) contenant lesdites premières données (D1, D3) via une liaison de communication (L) établie avec ledit terminal mobile (T) et pour recevoir, via ladite liaison de communication (L), un message de réponse (M2, M4) audit premier message, ledit message de réponse contenant lesdites deuxièmes données de transaction (D2, D4) générées par ledit terminal mobile en fonction desdites premières données et
- un module de traitement (MTT) configuré pour obtenir un code confidentiel et pour transmettre ledit code au terminal ou à l'équipement pour validation de ladite transaction,
**caractérisé en ce que** ledit code étant obtenu par lecture dudit code préenregistré dans une mémoire dudit dispositif portable, réalisée suite à une obtention d'un accord utilisateur via une première interface utilisateur dudit dispositif portable, ou par réception dudit code via une deuxième interface utilisateur dudit dispositif portable.

12. Dispositif portable selon la revendication 11 **caractérisé en ce qu'**il comporte une interface utilisateur (UI) pour commander l'arrêt ou la mise en fonctionnement dudit dispositif portable et/ou l'envoi d'un code confidentiel stocké dans une mémoire dudit dispositif portable.

13. Système comprenant un terminal mobile (T, T1, T2) et un dispositif portable associé audit terminal, dans lequel ledit dispositif portable est conforme à la revendication 11.

14. Programme d'ordinateur comprenant des instructions pour la mise en œuvre du procédé de transmission de données relatives à une transaction selon l'une des revendications 1 à 6, lorsque ce programme est exécuté par un processeur.

15. Support d'informations lisible par un processeur de données, et comportant des instructions pour la mise en œuvre du procédé de transmission de données relatives à une transaction selon l'une des revendications 1 à 6.

## Patentansprüche

1. Verfahren zur Übertragung von Daten im Zusammenhang mit einer kontaktlosen Transaktion zwischen einem mobilen Endgerät (T) und einer Einrichtung (E), wobei die Einrichtung in der Lage ist, Daten über einen kontaktlosen Nahfeldkommunikationskanal (C1) zu senden und zu empfangen,
wobei das Verfahren die folgenden Schritte umfasst, die von einer dem mobilen Endgerät (T) zugeordneten portablen Vorrichtung (B) ausgeführt werden:
- Empfangen (E1, E14) von ersten Transaktionsdaten (D1, D3) über den Kommunikationskanal (C1);
- Übertragen (E4, E18) einer ersten Nachricht (M1, M3), welche die ersten Daten enthält, über eine zum mobilen Endgerät (T) aufgebaute Kommunikationsverbindung (L);
- Empfangen (E12, E26), über die Kommunikationsverbindung (L), einer Antwortnachricht (M2, M4) auf die erste Nachricht (M1, M3), wobei die Antwortnachricht zweite Transaktionsdaten (D2, D4) enthält, die vom mobilen Endgerät in Abhängigkeit von den ersten Daten erzeugt werden;
- Übertragen der zweiten Daten (D2, D4) über den Kommunikationskanal (C1);
- Erhalten eines Geheimcodes von der portablen Vorrichtung; und
- Übertragen des Codes an das Endgerät oder an die Einrichtung zum Bestätigen der Transaktion,
**dadurch gekennzeichnet, dass** der Schritt des Erhaltens einen Schritt des Lesens des zuvor in einem Speicher der portablen Vorrichtung registrierten Codes, der nach einem Erhalten einer Benutzerzustimmung über eine erste Benutzerschnittstelle der portablen Vorrichtung ausgeführt wird, oder einen Schritt des Empfangens des Codes über eine zweite Benutzerschnittstelle der portablen Vorrichtung umfasst.

2. Übertragungsverfahren nach Anspruch 1, **dadurch gekennzeichnet, dass** es einen Schritt des Analysierens der empfangenen ersten Daten umfasst, um zu bestimmen, ob sie sich auf eine Geheimcodeanforderung beziehen, in dem der Geheimcode in die erste Nachricht eingefügt wird, wenn bestimmt wird, dass sich die ersten Daten auf eine Geheimcodeanforderung beziehen.

3. Übertragungsverfahren nach Anspruch 1, **dadurch gekennzeichnet, dass** es einen Schritt des Analysierens der empfangenen ersten Daten umfasst, um zu bestimmen, ob sie sich auf eine Geheimcodeanforderung beziehen, in dem der Geheimcode an die Einrichtung übertragen wird, wenn bestimmt wird, dass sich die ersten Daten auf eine Geheimcodeanforderung beziehen.

4. Übertragungsverfahren nach Anspruch 1, bei dem der Geheimcode erhalten wird, nachdem die portable Vorrichtung eine Benutzerhandlung detektiert hat, welche die Zustimmung des Benutzers signalisiert.

5. Datenübertragungsverfahren nach einem der vorhergehenden Ansprüche, bei dem die Kommunikationsverbindung eine Bluetooth-Verbindung ist.

6. Datenübertragungsverfahren nach einem der vorhergehenden Ansprüche, bei dem die portable Vorrichtung dem mobilen Endgerät über ein Pairing-Verfahren zugeordnet wird.

7. Verfahren zur Verarbeitung von Daten im Zusammenhang mit einer kontaktlosen Transaktion zwischen einem mobilen Endgerät (T) und einer Einrichtung (E), wobei die Einrichtung in der Lage ist, Daten über einen kontaktlosen Nahfeldkommunikationskanal (C1) zu senden und zu empfangen,
wobei das Verfahren die folgenden Schritte umfasst, die von dem mobilen Endgerät (T) ausgeführt werden:
- Empfangen (E6, E20) einer ersten Nachricht (M1, M3), die erste Transaktionsdaten (D1, D3) enthält, über eine Kommunikationsverbindung (L), die zwischen dem Endgerät (T) und einer dem mobilen Endgerät zugeordneten portablen Vorrichtung (B) aufgebaut ist, wobei die ersten Daten über den Kommunikationskanal (C1) empfangen worden sind;
- Übertragen (E10, E24) einer Antwortnachricht (M2, M4) auf die erste Nachricht (M1, M3) über die Kommunikationsverbindung (L), wobei die Antwortnachricht zweite Transaktionsdaten (D2, D4) enthält, die vom mobilen Endgerät in Abhängigkeit von den ersten Daten (D1, D3) erzeugt werden und dazu bestimmt sind, von der portablen Vorrichtung (B) über den Kommunikationskanal (C1) an die Einrichtung (E) übertragen zu werden;
wobei das Verfahren **dadurch gekennzeichnet ist, dass** es einen Schritt des Empfangens eines Geheimcodes zum Bestätigen der Transaktion umfasst, wobei der Geheimcode von der portablen Vorrichtung erhalten und übertragen wird, wobei der Code durch das Lesen des zuvor in einem Speicher der portablen Vorrichtung registrierten Codes erhalten wird, das nach dem Erhalten einer Benutzerzustimmung über eine erste Benutzerschnittstelle der portablen Vorrichtung ausgeführt wird, oder durch das Empfangen des Codes über eine zweite Benutzerschnittstelle der portablen Vorrichtung erhalten wird.

8. Datenverarbeitungsverfahren nach Anspruch 7, bei dem die ersten empfangenen Daten an ein Sicherheitsmodul des mobilen Endgeräts übertragen werden und bei dem die zweiten Daten von dem Sicherheitsmodul in Abhängigkeit von den ersten Daten (D1, D3) erzeugt werden.

9. Datenverarbeitungsverfahren nach Anspruch 8, bei dem die ersten Daten von einem ersten Kommunikationsmodul (COM2) des Endgeräts empfangen werden und an das Sicherheitsmodul (SM) über ein zweites kontaktloses Kommunikationsmodul (CLF2) des mobilen Endgeräts übertragen werden, und bei dem die zweiten Daten vom Sicherheitsmodul an das erste Kommunikationsmodul (COM2) des Endgeräts über das zweite Kommunikationsmodul (CLF2) des Endgeräts übertragen werden.

10. Datenverarbeitungsverfahren nach Anspruch 9, bei dem die ersten Daten vom zweiten Kommunikationsmodul (CLF2) des Endgeräts in einer Nachricht im Format HCI ("Host Controller Interface") empfangen werden und bei dem die zweiten Daten vom zweiten Kommunikationsmodul (CLF2) des Endgeräts in einer Nachricht im Format HCI übertragen werden.

11. Portable Vorrichtung (B), die einem mobilen Endgerät (T, T1, T2) zugeordnet ist, umfassend:
- ein erstes Kommunikationsmodul (CLF1), das dazu ausgelegt ist, über einen kontaktlosen Nahfeldkommunikationskanal (C1) erste Transaktionsdaten (D1, D3) zu empfangen, die von einer Einrichtung (E) gesendet werden, und zweite Transaktionsdaten (D2, D4) über den Kommunikationskanal (C1) zu senden;
- ein zweites Kommunikationsmodul (COM1), das dazu ausgelegt ist, eine erste Nachricht (M1, M3), welche die ersten Daten (D1, D3) enthält, über eine zum mobilen Endgerät (T) aufgebaute Kommunikationsverbindung (L) zu übertragen, und über diese Kommunikationsverbindung (L) eine Antwortnachricht (M2, M4) auf die erste Nachricht zu empfangen, wobei die Antwortnachricht die zweiten Transaktionsdaten (D2, D4) enthält, die vom mobilen Endgerät in Abhängigkeit von den ersten Daten erzeugt werden, und
- ein Verarbeitungsmodul (MTT), das dazu ausgelegt ist, einen Geheimcode zu erhalten und den Code zum Bestätigen der Transaktion an das Endgerät oder an die Einrichtung zu übertragen,
**dadurch gekennzeichnet, dass** der Code durch das Lesen des zuvor in einem Speicher der portablen Vorrichtung registrierten Codes, das nach einem Erhalten einer Benutzerzustimmung über eine erste Benutzerschnittstelle der portablen Vorrichtung ausgeführt wird, oder durch Empfangen des Codes über eine zweite Benutzerschnittstelle der portablen Vorrichtung erhalten wird.

12. Portable Vorrichtung nach Anspruch 11, **dadurch gekennzeichnet, dass** sie eine Benutzerschnittstelle (UI) zum Steuern des Ausschaltens oder Einschaltens der portablen Vorrichtung und/oder des Sendens eines im Speicher der portablen Vorrichtung gespeicherten Geheimcodes umfasst.

13. System, das ein mobiles Endgerät (T, T1, T2) und eine dem Endgerät zugeordnete portable Vorrichtung umfasst, wobei die portable Vorrichtung die Merkmale des Anspruchs 11 aufweist.

14. Computerprogramm, das Befehle umfasst, die bei der Ausführung des Programms durch einen Prozessor das Verfahren zur Übertragung von Daten im Zusammenhang mit einer Transaktion nach einem der Ansprüche 1 bis 6 ausführen.

15. Datenträger, der von einem Datenprozessor lesbar ist und Befehle zum Ausführen des Verfahrens zur Übertragung von Daten im Zusammenhang mit einer Transaktion nach einem der Ansprüche 1 bis 6 beinhaltet.

## Claims

1. Method for transmitting data relating to a contactless transaction between a mobile terminal (T) and a equipment item (E), said equipment item being capable of transmitting and of receiving data via a contactless near field communication channel (C1),
the method comprising the following steps, implemented by a portable device (B) associated with said mobile terminal (T):
- reception (E1, E14) of first transaction data (D1, D3) via said communication channel (C1);
- transmission (E4, E18) of a first message (M1, M3) containing said first data via a communication link (L) established with said mobile terminal (T);
- reception (E12, E26) via said communication link (L), of a response message (M2, M4) to said first message (M1, M3), said response message containing second transaction data (D2, D4) generated by said mobile terminal as a function of said first data;
- transmission of said second data (D2, D4) via said communication channel (C1);
- obtaining, by said portable device, of a confidential code; and
- transmission of said code to the terminal or to the equipment item for validation of said transaction,
**characterized in that** said obtaining step comprises a step of reading of said code prestored in a memory of said portable device, performed following an obtaining of a user agreement via a first user interface of said portable device, or a step of reception of said code via a second user interface of said portable device.

2. Transmission method according to Claim 1, **characterized in that** it comprises a step of analysis of said first received data to determine whether they relate to a confidential code request and in which said confidential code is inserted into said first message if it is determined that the first data relate to a confidential code request.

3. Transmission method according to Claim 1, **characterized in that** it comprises a step of analysis of said first received data to determine whether they relate to a confidential code request and in which said confidential code is transmitted to said equipment item if it is determined that the first data relate to a confidential code request.

4. Transmission method according to Claim 1, in which the confidential code is obtained following a detection by said portable device of a user action signaling the agreement of said user.

5. Data transmission method according to one of the preceding claims in which said communication link is a Bluetooth-type link.

6. Data transmission method according to one of the preceding claims, in which said portable device is associated with said mobile terminal by a pairing procedure.

7. Method for processing data relating to a contactless transaction between a mobile terminal (T) and a equipment item (E), said equipment item being capable of transmitting and of receiving data via a contactless near field communication channel (C1),
the method comprising the following steps, implemented by said mobile terminal (T):
- reception (E6, E20) of a first message (M1, M3) containing first transaction data (D1, D3), via a communication link (L) established between said terminal (T) and a portable device (B) associated with said mobile terminal, said first data having been received via said communication channel (C1);
- transmission (E10, E24) via said communication link (L), of a response message (M2, M4) to said first message (M1, M3), said response message containing second transaction data (D2, D4) generated by said mobile terminal as a function of said first data (D1, D3) and intended to be transmitted by said portable device (B) to said equipment item (E) via said communication channel (C1);
the method being **characterized in that** it comprises a step of reception of a confidential code for validation of said transaction, said confidential code being obtained and transmitted by said portable device, said code being obtained by reading of said code prestored in a memory of said portable device, performed following an obtaining of a user agreement via a first user interface of said portable device, or by reception of said code via a second user interface of said portable device.

8. Data processing method according to Claim 7, in which the first received data are transferred to a security module of the mobile terminal and in which the second data are generated by said security module as a function of the first data (D1, D3).

9. Data processing method according to Claim 8, in which the first data are received by a first communication module (COM2) of said terminal and transferred to the security module (SM) via a second contactless communication module (CLF2) of the mobile terminal and in which the second data are transmitted by the security module to said first communication module (COM2) of the terminal via the second communication module (CLF2) of the terminal.

10. Data processing method according to Claim 9, in which the first data are received by the second communication module (CLF2) of the terminal in a message in the HCI (Host Controller Interface) format and in which the second data are transmitted by said second communication module (CLF2) of the terminal in a message in the HCI format.

11. Portable device (B) associated with a mobile terminal (T, T1, T2) comprising:
- a first communication module (CLF1) configured to receive, via a contactless near field communication channel (C1), first transaction data (D1, D3) transmitted by an equipment item (E) and to transmit second transaction data (D2, D4) via said communication channel (C1);
- a second communication module (COM1) configured to transmit a first message (M1, M3) containing said first data (D1, D3) via a communication link (L) established with said mobile terminal (T) and to receive, via said communication link (L), a response message (M2, M4) to said first message, said response message containing said second transaction data (D2, D4) generated by said mobile terminal as a function of said first data and
- a processing module (MTT) configured to obtain a confidential code and to transmit said code to the terminal or to the equipment item for validation of said transaction,
**characterized in that** said code is obtained by reading of said code prestored in a memory of said portable device, performed following an obtaining of a user agreement via a first user interface of said portable device, or by reception of said code via a second user interface of said portable device.

12. Portable device according to Claim 11, **characterized in that** it comprises a user interface (UI) for controlling the stopping or the starting up of said portable device and/or the sending of a confidential code stored in a memory of said portable device.

13. System comprising a mobile terminal (T, T1, T2) and a portable device associated with said terminal, in which said portable device is in accordance with Claim 11.

14. Computer program comprising instructions for the implementation of the method for transmitting data relating to a transaction according to one of Claims 1 to 6, when this program is run by a processor.

15. Information medium that can be read by a data processor, and comprising instructions for the implementation of the method for transmitting data relating to a transaction according to one of Claims 1 to 6.
